# EUROPÄISCHE PATENTSCHRIFT

(11) **EP 3 072 841 B1**
(45) Veröffentlichungstag und Bekanntmachung des Hinweises auf die Patenterteilung: **05.12.2018**
(21) Anmeldenummer: 16161787.3
(22) Anmeldetag: 22.03.2016
(51) Int. Cl.: B65H 63/08, B65H 61/00, G06Q 10/08

(54) **VERFAHREN ZUR BEWIRTSCHAFTUNG EINES KABELTROMMELREGALS UND KABELTROMMELREGAL**
METHOD FOR RUNNING A CABLE REEL SHELF AND CABLE REEL SHELF
PROCEDE D'EXPLOITATION D'UN RAYONNAGE POUR TOURETS DE CABLES ET RAYONNAGE POUR TOURETS DE CABLES

(30) Priorität: 24.03.2015 EP 15160615
(43) Veröffentlichungstag der Anmeldung: 28.09.2016
(73) Patentinhaber: Lapp Engineering & Co., 6330 Cham (CH)
(72) Erfinder: Schmitt, Patrick, 70565 Stuttgart (DE); Bärlin, Madlen, 71563 Affalterbach (DE); Conforte, Laura, 70435 Stuttgart (DE)
(74) Vertreter: Rutz & Partner

(56) Entgegenhaltungen:
- WO-A1-88/06272
- WO-A1-2013/118087
- WO-A2-96/36549
- DE-U1-202008 014 783
- US-A- 5 305 199
- US-A1- 2006 000 936

## Beschreibung

Die Erfindung betrifft ein Verfahren zur automatisierten Bewirtschaftung eines Kabeltrommelregals und ein zur Anwendung dieses Verfahrens geeignetes Regal zur Lagerung von Kabeltrommeln.

Kabel sind Grundlageprodukte in diversen Anwendungsgebieten, unter anderem im Maschinen- und Fahrzeugbau, Energieerzeugungs- und Verteiltechnik, Automatisierungstechnik und bei der Gebäudeverkabelung. Oftmals werden hierbei für eine einzelne Anwendung mehrere unterschiedliche Kabeltypen - z.B. mit einer unterschiedlichen Anzahl Einzeladern, mit unterschiedlichen Mantelmaterialien oder für unterschiedliche Spannungsbereiche - eingesetzt. Um Engpässe bei der Herstellung zu vermeiden, muss deshalb eine Vielzahl unterschiedlicher Kabel jederzeit zur Verfügung stehen. Hierzu wird ein Kabeltrommelregal benötigt.

In einem Kabellager werden die einzelnen Kabeltypen auf Kabeltrommeln in einem Kabeltrommelregal gelagert. Ein solches Kabeltrommelregal ist z.B. aus der DE4211064A1 bekannt. Von den im Kabeltrommelregal gelagerten Kabeltrommeln kann die benötigte Länge eines Kabels in einfacher Weise entnommen werden.

Aus der WO2013/118087A1 sind Abgabeverfahren für eine Vielzahl von garnartigen Produkten bekannt, die nach Länge verkauft werden und auf einer Vielzahl von Spulen gestützt sind, die an einem Auslagemodul montiert sind, welches eine Zähltrommel und eine Zählvorrichtung umfasst, in die das garnartige Produkt einführbar ist.

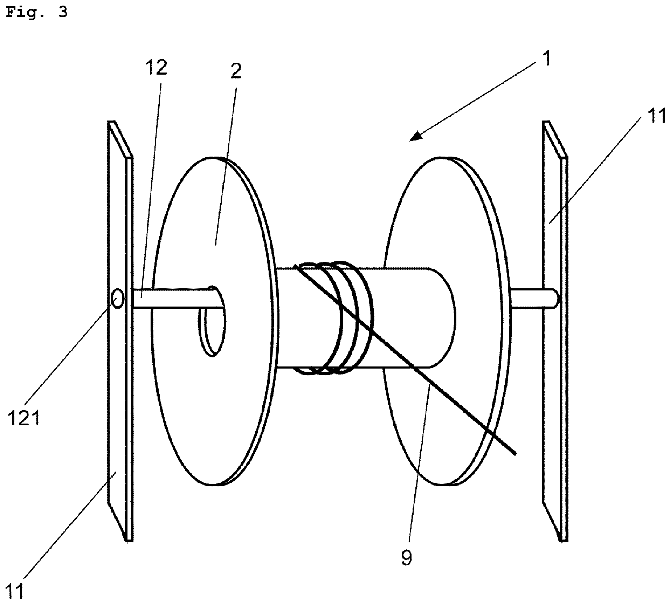

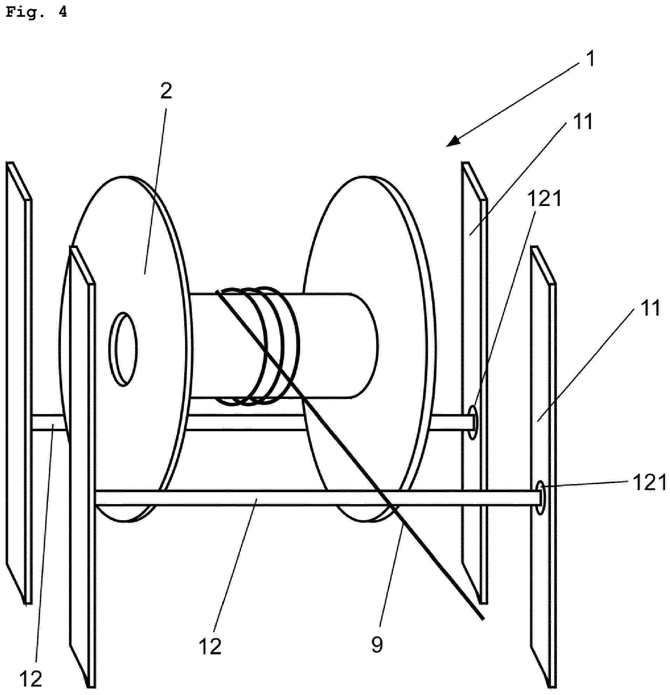

Die Fig. 3 und Fig. 4 zeigen aus dem Stand der Technik bekannte Kabeltrommelregale 1, in denen Kabeltrommeln 2 drehbar gelagert sind. Die Kabeltrommelregale 1 umfassen eine Regalstruktur 11 mit einer oder mehreren Kabeltrommelhaltevorrichtungen 12, die durch Vorrichtungen oder Drehgelenke 121 gehalten sind. Eine Kabeltrommel 2 auf der sich ein Kabel 9 befindet kann stabil auf dem Kabeltrommelregal 1 gelagert werden indem eine Kabeltrommelhaltevorrichtung bzw. eine Haltewelle 12 durch die Kabeltrommel 2 hindurch durchgeführt wird (Fig. 3) oder indem die Kabeltrommel 2 auf zumindest zwei Kabeltrommelhaltevorrichtungen bzw. Haltewellen 12 aufgelegt wird (Fig. 4).

Bei der Bewirtschaftung des Kabeltrommelregals ist die Versorgungssicherheit jederzeit sicherstellen. Dazu werden die Lagerbestände regelmässig erfasst und entnommenes Kabel wieder ergänzt. Traditionell werden die Erfassung der Lagerbestände und die Ergänzung des Lagers durch einen Lagerverantwortlichen durchgeführt. Der Lagerverantwortliche prüft die Bestände periodisch und leitet bei Bedarf den Bestellvorgang zur Ergänzung ein. Diese Art der Bestandsüberwachung ist personalintensiv und mit einer inhärenten Unsicherheit behaftet.

Um Verfügbarkeitslücken zu vermeiden, werden zusätzlich zur angebrochenen Kabeltrommel mit einem bestimmten Kabel noch weitere komplette Kabeltrommeln des gleichen Kabels gelagert. Dies erfordert einen grossen zusätzlichen Platzbedarf, der im Kabeltrommellager bereitgestellt werden muss. Zudem binden auf Vorrat gelagerte Kabeltrommeln Kapital.

Der Erfindung liegt daher die Aufgabe zugrunde, ein Verfahren zur verbesserten Bewirtschaftung und Ergänzung eines Kabeltrommelregals anzugeben sowie ein verbessertes Kabeltrommelregal zu schaffen, welches zur Anwendung dieses Verfahrens geeignet ist.

Durch Anwendung des erfindungsgemässen Verfahrens soll der Personalaufwand reduziert werden können.

Ferner soll durch Anwendung des erfindungsgemässen Verfahrens der effektive Lagerbestand reduziert werden können und gleichzeitig die Versorgungssicherheit gewährleistet werden. Weiterhin sollen Unsicherheiten und Fehler bei der Bewirtschaftung des Kabeltrommelregals ausgeschlossen werden.

Das erfindungsgemässe Kabeltrommelregal soll insbesondere eine effiziente Durchführung des Verfahrens ermöglichen.

Diese Aufgabe wird mit einem Verfahren und einem Kabeltrommelregal gelöst, welche die in Anspruch 1 bzw. 9 angegebenen Merkmale aufweisen. Vorteilhafte Ausgestaltungen der Erfindung sind in weiteren Ansprüchen angegeben.

Das Verfahren dient der effizienten Bewirtschaftung und automatisierten Ergänzung eines Kabeltrommelregals. Das Kabeltrommelregal beinhaltet zumindest einen Lagerplatz für eine Kabeltrommel. Vorzugsweise beinhaltet das Kabeltrommelregal eine Vielzahl von Lagerplätzen, weiter bevorzugt sind auf den Lagerplätzen eine grosse Anzahl unterschiedlicher Kabeltypen auf Kabeltrommeln gelagert. Von einem Verbraucher wird aus dem Kabeltrommelregal von einer Kabeltrommel eine benötigte Menge Kabel bzw. ein Kabelabschnitt gewünschter Länge entnommen.

Erfindungsgemäss umfasst das Kabeltrommelregal wenigstens eine Messeinheit und eine Verarbeitungseinheit, mittels denen bei jeder Kabelentnahme ein Wert für die Restmenge des Kabels auf der Kabeltrommel direkt oder indirekt bestimmt wird, wobei
a) nach der Kabelentnahme zumindest eine Zustandsgrösse der Kabeltrommel gemessen und daraus ein Wert für die verbliebene Restmenge des Kabels berechnet wird, oder
b) während der Kabelentnahme die Menge des entnommenen Kabels gemessen und ein Wert für die entnommene Kabelmenge ermittelt und anhand dessen ausgehend von einem registrierten Wert der Restmenge vor der Kabelentnahme ein Wert für die verbliebene Restmenge des Kabels berechnet wird,

Der Wert der verbliebenen Restmenge des Kabels wird abschliessend mit einem Mindestsollbestandswert verglichen, wonach bei Unterschreiten dieses Mindestsollbestandswerts eine Bestellung für das überwachte Kabel ausgelöst wird.

Falls die Restmenge grösser als der Mindestsollbestandswert ist, werden die Messeinheit und die Verarbeitungseinheit vorzugsweise in einen Bereitschaftszustand (Stand by) oder nach längerer Zeit in einen Ruhemodus versetzt, in dem sie kaum Energie benötigen.

Die Messeinheit ist vorzugsweise mit einem Messmodul ausgerüstet, mittels dessen zur Bestimmung des Werts der entnommenen Kabelmenge oder zur Berechnung des Werts der Restmenge des Kabels
a) die Länge des entnommenen Kabels; oder
b) das Gewicht oder die Gewichtsänderung der Kabeltrommel; oder
c) der Füllstand oder die Füllstandsänderung der Kabeltrommel; oder
d) der Füllstand der Kabeltrommel und die Umdrehungen der Kabeltrommel
gemessen werden.

Durch die Messung der Länge des entnommenen Kabels, durch die Gewichtsänderung der Kabeltrommel, durch die Änderung des Füllstands sowie durch Berücksichtigung des Füllstands und der Umdrehungen der Kabeltrommel kann je der Wert der entnommenen Kabelmenge ermittelt werden. Durch Messung des nach der Kabelentnahme verbliebenen Gewichts oder des verbliebenen Füllstands der Kabeltrommel kann der Wert für die Restmenge des Kabels direkt berechnet werden. Die Restmenge des Kabels auf der Kabeltrommel kann daher auf verschiedene Arten gemessen und berechnet werden.

Die Messeinheit kann den Wert der Restmenge des Kabels z.B. durch Gewichtsmessung oder Füllstandsmessung direkt ermitteln und zur Verarbeitungseinheit übertragen.

Alternativ kann die Messeinheit den Wert der entnommenen Kabelmenge ermitteln und zur Verarbeitungseinheit übertragen, die in der Folge durch Subtraktion der entnommenen Kabelmenge von der vor der Kabelentnahme registrierten Restmenge einen neuen Wert für die Restmenge berechnen.

Die Verarbeitungseinheit vergleicht in der Folge die berechnete neue Restmenge mit einem Mindestsollbestandswert und löst eine Bestellung aus, falls die neue Restmenge unterhalb des Mindestsollbestandswerts liegt.

In einer vorzugsweisen Ausgestaltung besteht ein Kommunikationskanal zu einem Lieferanten, über den die Verarbeitungseinheit eine Bestellung abgeschickt. Die Bestellung kann aber auch an einen lokalen Leitrechner gesandt werden, welcher seinerseits die Bestellung prüft, gegebenenfalls modifiziert, und weiterleitet.

Nach Abschluss des Vorgangs wird die neue Restmenge vorzugsweise in einer Datenbank gespeichert, so dass bei einem nächsten Entnahmevorgang wiederum auf den letzten Wert der Restmenge zurückgegriffen werden kann.

In einer bevorzugten Ausführungsform des Verfahrens erfolgt die Übermittlung der Daten zwischen der Messeinheit und der Verarbeitungseinheit über ein Drahtlosnetzwerk, vorzugsweise über ein WLAN-Netzwerk, wie ein Bluetooth-Netzwerk. Durch die Verwendung eines Drahtlosnetzwerks entfällt eine komplizierte und kostenintensive Verkabelung zwischen Messeinheit und Verarbeitungseinheit. Zudem kann die Verarbeitungseinheit von der Messeinheit unabhängig räumlich positioniert werden. Umgekehrt ist es auch möglich, dass die Messeinheit und die Verarbeitungseinheit eine Einheit bilden. Funktionen und Aufgaben können wahlweise zwischen der Messeinheit und der Verarbeitungseinheit aufgeteilt werden.

In einer weiteren bevorzugten Ausführungsform wird die Messeinheit durch eine Bewegung der Kabeltrommel in einen Messmodus versetzt. Die Bewegung der Kabeltrommel kann durch einen Benutzer, einen Roboter oder eine Maschine bewirkt werden und wird vorzugsweise durch zumindest einen sich im Kabeltrommelregal befindlichen Sensor detektiert. Vorzugsweise wird die im Messmodus durchgeführte Messung der Restmenge und/oder die Messung der entnommenen Kabelmenge durch die Messeinheit so durchgeführt, dass keine Aktion eines Benutzers und/oder Bedieners des Kabeltrommelregals notwendig ist. Selbst die vorgenannte Versetzung in den Messmodus und zurück in den Ruhemodus erfolgt vorzugsweise automatisch. Weiter bevorzugt wird die Messung der Restmenge und/oder die Messung der entnommenen Kabelmenge durch die Messeinheit automatisiert durchgeführt, wobei der Benutzer und/oder Bediener des Kabeltrommelregals durch die Messung in seinen Arbeitsabläufen nicht eingeschränkt wird.

In einer weiteren bevorzugten Ausführungsform wird der für jedes Kabel festgelegte Mindestsollbestandswert periodisch an den aktuellen stündlichen und/oder täglichen und/oder wöchentlichen und/oder monatlichen Verbrauch an Kabel eines Kabeltyps angepasst. Vorzugsweise wird der Mindestsollbestandswert täglich angepasst. Durch die Anpassung des Mindestsollbestandswert an den zukünftig erwarteten Verbrauch kann die Versorgung sichergestellt werden, ohne dass eine unverhältnismässig grosse Menge an Kabel gelagert werden muss. Dies reduziert zudem die Menge an im Kabeltrommelregal gebundenem Kapital. Vorzugsweise wird der Mindestsollbestandswert durch ein Auftragssteuerungsprogramm (ERP-System) an die aktuellsten Bedürfnisse angepasst. Das Auftragssteuerungsprogramm kann lokal in der Verarbeitungseinheit oder zentral in einem Leitrechner implementiert sein.

Vorzugsweise wird der Verbrauch innerhalb einer Zeitperiode, z.B. innerhalb eines Tages, kontinuierlich überwacht und der Mindestsollbestandswert entsprechend nachgeführt.

Vorzugsweise erfolgt die Berechnung der Restmenge des Kabels durch die Messeinheit oder die Verarbeitungseinheit unter Verwendung von Erfahrungswerten, Proportionalitätsfaktoren oder Kenngrössen, wie den technischen Daten des Kabels. Z.B. wird das spezifische Gewicht pro Längeneinheit des Kabels verwendet. Durch Verwendung von technischen Daten des Kabels können unterschiedliche physikalische Grössen, welche durch die Messeinheit gemessen werden, zur Berechnung der Restmenge genügen. Wird z.B. das entnommene Gewicht und/oder das Gewicht vor und nach der Entnahme gemessen, so kann aus diesem Wert von der Verarbeitungseinheit - unter Verwendung des spezifischen Gewichts pro Längeneinheit - die Restmenge berechnet werden. Falls z.B. mittels eines optischen oder akustischen Sensors die aktuelle Höhe der Kabelwicklung gemessen wird, kann z.B. anhand des Kabeldurchmessers und gegebenenfalls unter Berücksichtigung weiterer Kenngrössen die Länge der Restmenge des Kabels ermittelt werden.

Die technischen Daten des Kabels oder der Kabel sind vorzugsweise in einer Speichereinheit gespeichert, welche auf der Kabeltrommel aufgebracht ist. Vorzugsweise ist die Speichereinheit Teil eines Transponders, insbesondere eines RFID-Transponders, aus dem Daten drahtlos abgerufen werden können. Bei der Installation einer Kabeltrommel werden daher die Eigenschaften oder Daten dieser Kabeltrommel, wie Bruttogewicht mit Kabel, Nettogewicht der Kabeltrommel ohne Kabel, technische Daten des Kabels und die Kabellänge vorzugsweise drahtlos zur Messeinheit und/oder zur Verarbeitungseinheit übertragen. Das Auslesen der Daten kann durch fest installierte Auslesegeräte automatisch oder mittels eines Handscanners manuell erfolgen.

Das erfindungsgemässe Kabeltrommelregal umfasst zumindest einen Lagerplatz für zumindest eine Kabeltrommel. Hauptkörper des Kabeltrommelregals ist eine Regalstruktur. An der Regalstruktur sind Kabeltrommelhaltevorrichtungen angebracht, die der drehbaren Lagerung der gehaltenen Kabeltrommeln dienen. Die Kabeltrommelhaltevorrichtungen können dabei selbst in der Regalstruktur drehbar gelagert sein. Durch die drehbare Lagerung wird die Kabelentnahme vereinfacht. Das Kabeltrommelregal umfasst zudem wenigstens eine Messeinheit und wenigstens eine Verarbeitungseinheit, zwischen denen Daten über ein Datenkabel oder vorzugsweise über eine drahtlose Kommunikationsverbindung, vorzugsweise ein Drahtlosnetzwerk, weiter bevorzugt ein WLAN-Netzwerk, ausgetauscht werden können.

In einer bevorzugten erfindungsgemässen Ausgestaltung ist die Messeinheit derart ausgebildet und am Kabeltrommelregal angeordnet, dass die Messeinheit das Gesamtgewicht einer Kabeltrommel inklusive des sich darauf befindlichen Kabels messen kann. Hierzu wird ein Gewichtssensor an die Kabeltrommelhaltevorrichtung angebracht, so dass die Kabeltrommel im gelagerten Zustand den Sensor mit dem Gesamtgewicht beaufschlägt. Alternativ wird ein Gewichtssensor in das Drehgelenk für die Kabeltrommelhaltevorrichtung integriert, so dass die Kabeltrommelhaltevorrichtung inklusive der sich darauf befindlichen Kabeltrommel samt Kabel auf den Gewichtssensor wirken. In einer weiteren alternativen Ausführungsform ist das gesamte Kabeltrommelregal auf Gewichtsmessplatten gelagert, so dass das Gesamtgewicht des Kabeltrommelregals sowie aller sich darauf befindlicher Kabeltrommeln inklusive Kabel gemessen werden kann. In der Folge können die Gerichtsänderungen gemessen und jeweils einer Kabeltrommel zugeordnet werden. Z.B. werden Bewegungen einer Kabeltrommel z.B. mittels einer Lichtschranke oder eines induktiven Sensors detektiert, wonach die Gewichtsmessung erfolgt und die gemessene Gewichtsänderung dieser Kabeltrommel zugeordnet wird.

In einer weiteren erfindungsgemässen Ausgestaltung ist die Messeinheit so ausgeführt, dass die Länge des während des Entnahmevorgangs entnommenen Kabels gemessen werden kann. In einer bevorzugten Ausgestaltung ist die Messeinheit als Meterzähler ausgeführt. Während des Entnahmevorgangs wird das zu entnehmende Kabel durch die Messeinheit bzw. den Meterzähler hindurch durchgeführt, so dass die entnommene Menge bestimmt werden kann. Z.B. wird das Kabel über ein Messrad geführt, dessen Umdrehungen gezählt werden.

In einer weiteren erfindungsgemässen Ausgestaltung umfasst die Messeinheit optische Sensoren, mittels denen der Füllstand der zumindest einen Kabeltrommel im Kabeltrommelregal gemessen werden kann. Ein optisches Signal, vorzugsweise ein Lasersignal, wird vorzugsweise schrittweise über die gesamte Breite der Kabeltrommel oder radial nach aussen, insbesondere entlang dem mit Kabel gefüllten Bereich, geführt. Für jeden Messpunkt wird ein zurückgeworfenes Signal ausgewertet und in einen Füllgrad konvertiert.

In einer weiteren erfindungsgemässen Ausgestaltung umfasst die Messeinheit Ultraschall-Sensoren, die den Füllstand der zumindest einen Kabeltrommel im Kabeltrommelregal erfassen können. Ein Ultraschallsignal wird vorzugsweise schrittweise über die gesamte Breite oder radial entlang der Kabeltrommel, insbesondere entlang dem mit Kabel gefüllten Bereich, geführt. Für jeden Messpunkt wird ein zurückgeworfenes Signal ausgewertet und in einen Füllgrad konvertiert.

Möglich ist auch eine mechanische Abtastung z.B. durch Hebel, der an einer Seite drehbar gelagert ist und auf der anderen Seite auf dem Kabel ruht. Der Drehwinkel des Hebels kann in der Folge als Messgrösse für den Füllstand verwendet werden.

Nachfolgend wird die Erfindung anhand von Zeichnungen näher erläutert. Dabei zeigt:
- Fig. 1: ein erstes Ablaufdiagramm für das erfindungsgemässe Verfahren, das der verbesserten Bewirtschaftung eines Kabeltrommelregals 1 dient;
- Fig. 2: ein zweites Ablaufdiagramm einer weiteren Ausführungsform des erfindungsgemässen Verfahrens zur Bewirtschaftung eines Kabeltrommelregals 1;
- Fig. 3: eine schematische Darstellung eines aus dem Stand der Technik bekannten Kabeltrommelregals;
- Fig. 4: eine schematische Darstellung eines weiteren aus dem Stand der Technik bekannten Kabeltrommelregals;
- Fig. 5: eine schematische Darstellung eines erfindungsgemässen Kabeltrommelregals 1 mit mehreren schematisch dargestellten Messeinheiten 3, 4, 5 und einer Verarbeitungseinheit 6.

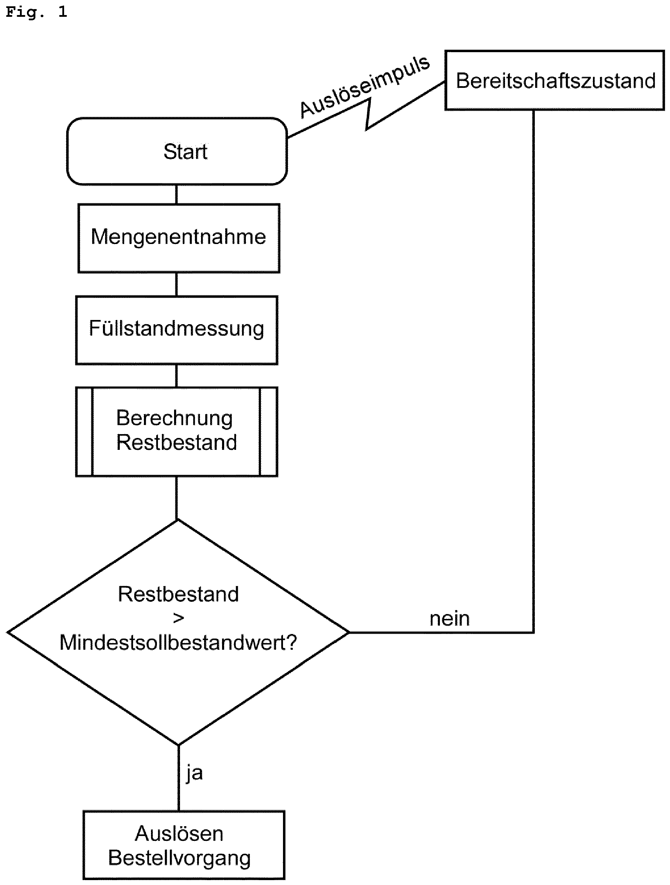

Fig. 1 zeigt ein erstes Ablaufdiagramm für das erfindungsgemässe Verfahren, das der verbesserten Bewirtschaftung eines Kabeltrommelregals 1 dient.

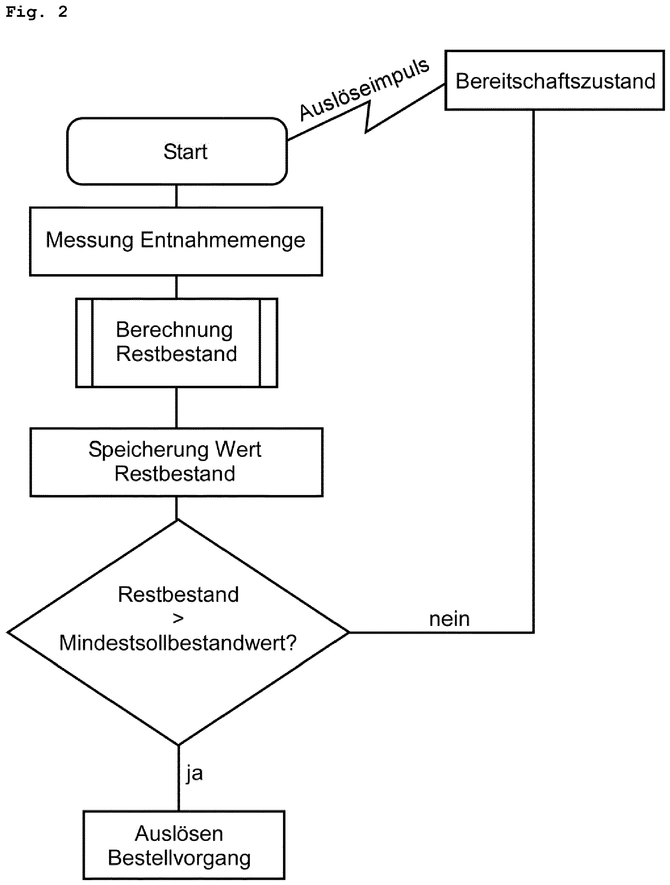

Fig. 2 zeigt ein zweites Ablaufdiagramm einer weiteren Ausführungsform des erfindungsgemässen Verfahrens zur Bewirtschaftung eines Kabeltrommelregals 1.

Die Figuren 3 und 4 zeigen schematisch aus dem Stand der Technik bekannte Kabeltrommelregale 1, die eingangs beschrieben wurden.

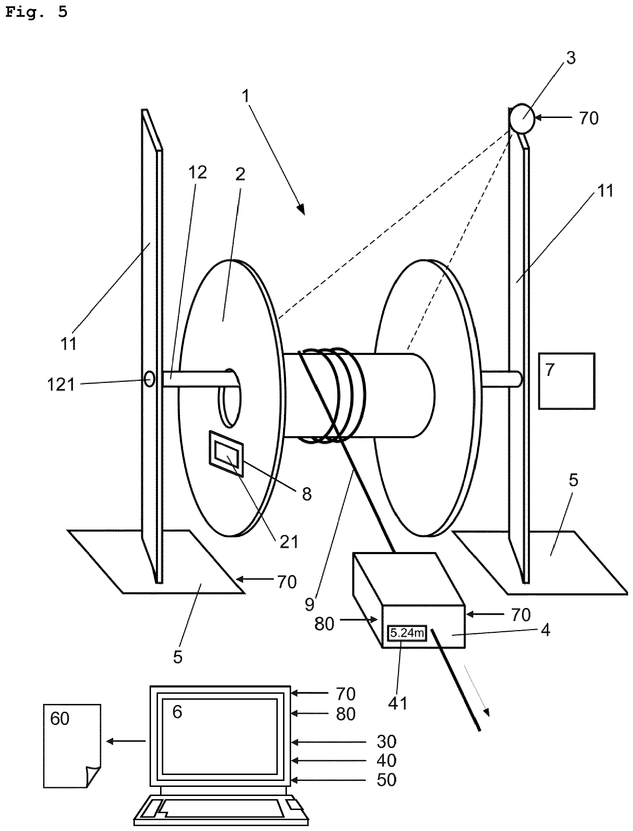

Fig. 5 zeigt exemplarisch ein erfindungsgemässes Kabeltrommelregal 1 in einer vorzugsweisen Ausgestaltung, welches anhand des erfindungsgemässen Verfahrens gemäss dem ersten oder zweiten Ablaufdiagramm vorteilhaft bewirtschaftet werden kann. Die Bewirtschaftung dieses Kabeltrommelregals 1 kann automatisch erfolgen. Das Kabeltrommelregal 1 ist dabei in der Lage sich selbst zu konfigurieren. Daten der gelieferten Kabeltrommeln 2 werden vorzugsweise automatisch ausgelesen und für die Bewirtschaftung des Kabeltrommelregals 1 verwendet.

Das Kabeltrommelregal 1 von Fig. 5 umfasst eine Regalstruktur 11 sowie zumindest eine Kabeltrommelhaltevorrichtung 12, welche dem drehbaren Halten einer Kabeltrommel 2 dient und dazu in dieser vorzugsweisen Ausgestaltung über ein Drehgelenk 121 mit der Regalstruktur 11 verbunden ist. Kabel 9 kann somit durch Ziehen von der Kabeltrommel 2 bedarfsweise entnommen werden. Bei der Kabelentnahme wird die Kabeltrommel 2 in Bewegung versetzt und gedreht, was mittels eines Sensors 7, z.B. mittels eines optischen oder induktiven Sensors, detektiert werden kann.

Die Kabeltrommel 2 umfasst in dieser vorzugsweisen Ausgestaltung eine Speichereinheit 21, welche z.B. auf den Grundkörper der Kabeltrommel 2 aufgeklebt oder in den Grundkörper der Kabeltrommel 2 integriert ist. Aus der Speichereinheit 21 können die Daten ausgelesen und für die nachstehend beschriebenen Berechnungen verwendet werden. Dazu ist die Speichereinheit 21 vorzugsweise in einen Transponder 8, vorzugsweise einen RFID-Transponder, eingebettet, welche Daten aus der Speichereinheit 21 entnehmen und über drahtgebundene oder drahtlose Kommunikationskanäle 80 an eine externe Kommunikationseinheit übertragen kann.

Das Kabeltrommelregal 1 ist mit mehreren Messeinheiten 3, 4 und 5 ausgerüstet, von denen wenigstens eine vorhanden sein muss, um Veränderungen bei der Kabelentnahme oder neue Zustände nach einer Kabelentnahme im Kabeltrommelregal 1 zu messen.

Ferner ist eine Verarbeitungseinheit 6, z.B. ein üblicher Computer, vorgesehen, der über Kommunikationsschnittstellen drahtlos oder drahtgebunden mit den Messeinheiten 3, 4, 5, dem Sensor 7 und den Transponder 8 Daten austauschen kann. Die Messeinheiten 3, 4, 5 können auch mit einer Verarbeitungseinheit 6 ausgerüstet sein, sodass z.B. die Verarbeitungseinheit 6 in die Messeinheit 4 integriert ist, oder umgekehrt.

Das Kabeltrommelregal 1 umfasst z.B. Messeinheit in der Ausgestaltung eines Füllstandsensors 3, eines Meterzählers 4 oder einer Waage, z.B. einer Gewichtsmessplatte 5. Erfindungsgemäss umfasst das Kabeltrommelregal 1 wenigstens eine Messeinheit, vorzugsweise eine der Messeinheiten 3, 4 oder 5.

Der Füllstandsensor 3 ist so an der Regalstruktur 11 angeordnet, dass über optische Wellen, elektromagnetische Wellen und/oder Ultraschallwellen der Füllstand der Kabeltrommel 2 erfasst werden kann. Hierzu erfasst der Sensor 3 den Füllstand über die gesamte Breite der Kabeltrommel (angedeutet durch gestrichelte Linien), entweder durch eine einzelne Messung oder durch eine Vielzahl von Einzelmessungen, bei denen die gesamte Breite der Kabeltrommel abgetastet wird. Bei der Entnahme des Kabels erhöht sich der Abstand zwischen den Sensor und der Kabeloberfläche kontinuierlich, weshalb eine entsprechende Verzögerung bei der Reflexion des Signals resultiert. Möglich ist ferner, dass z.B. optische Sensoren ausgehend von der Kabeltrommelhaltevorrichtung bzw. Haltewelle 12 radial nach aussen angeordnet werden. In diesem Fall wird das Signal vom Kabel zurückgeworfen, bis es entnommen wird. In gleicher Weise können Lichtschranken vorgesehen werden, die unterbrochen werden, solange das Kabel 9 vorhanden ist. Mittels des Füllstandsensors 3 kann der Füllstand der Kabeltrommel 2 gemessen und somit die Restmenge des Kabels 9 bestimmt werden. Die Restmenge des Kabels 9 wird vorzugsweise anhand von technischen Daten des Kabels 2, insbesondere des Durchmessers, gegebenenfalls unter Berücksichtigung von Erfahrungswerten bestimmt, die in Kennlinien oder Tabellen festgelegt sind.

Alternativ zum Füllstandsensor 3 kann ein Meterzähler 4 verwendet werden, der umfasst vorzugsweise eine Anzeige 41 umfasst. Bei der Kabelentnahme wird das Kabel 9 während des Abwickelvorgangs durch den Meterzähler 4 geführt (in Pfeilrichtung), so dass der Meterzähler die entnommene Kabelmenge bestimmen kann. Z.B. wird das Kabel 9 über ein Messrad geführt, dessen Umdrehungen gezählt werden.

Alternativ kann das Kabeltrommelregal 1 auf zumindest einer Waage oder Gewichtsmessplatte 5 stehen. Die Gewichtsmessplatte 5 kann die Gewichtsdifferenz des Gesamtsystems (Kabeltrommelregal und Kabeltrommeln und Kabel) vor und nach der Kabelentnahme oder nur das Endgewicht nach der Kabelentnahme bestimmen. Durch Kenntnis der technischen Daten des Kabels (welche vorzugsweise auf der Speichereinheit 21 gespeichert sind) kann durch die Gewichtsdifferenz die entnommene Kabellänge errechnet werden. Alternativ kann dem Endgehalt der Kabeltrommel in einer Tabelle eine Restmenge zugeordnet sein.

In einer weiteren vorzugsweisen Ausgestaltung werden anstelle der Gewichtsmessplatten 5 mehrere Gewichtssensoren eingesetzt, welche vorzugsweise in den Achslagern oder Drehgelenken 121 und/oder in der Kabeltrommelhaltevorrichtung 12 integriert sind.

Fig. 5 zeigt ferner, dass die Messeinheiten 3, 4 und 5 über drahtgebundene oder drahtlose Kommunikationskanäle 30, 40, 50 mit der Verarbeitungseinheit 6, vorzugsweise einem zentralisierten Server oder Personal Computer, verbunden sind, über die Messdaten und Steuerdaten vorzugsweise bidirektional übertragen können. Ferner können der Verarbeitungseinheit 6 oder auch den Messeinheiten 3, 4, 5 Signale des Bewegungssensors 7 oder des Transponder 8 über drahtlose oder drahtgebundene Kommunikationskanäle 70, 80 zugeführt werden.

Mit der Installation einer neuen Kabeltrommel 2 werden die Daten der installierten Kabeltrommel 2 vorzugsweise über den Transponder 8 ausgelesen und zur Verarbeitungseinheit 6, gegebenenfalls zu den Messeinheit den 3, 4, 5 übertragen. Das erfindungsgemässe Kabeltrommelregal 1 kann sich daher selbst konfigurieren, ohne dass eine Intervention des Anwenders erforderlich ist.

Vor dem Beginn des Verfahrens befinden sich sämtliche involvierten Komponenten in einem Bereitschaftszustand. Vorzugsweise ist der Energieverbrauch der am Verfahren beteiligten Komponenten im Bereitschaftszustand auf ein Minimum reduziert. Durch einen Auslöseimpuls wird das Verfahren gestartet. Als Auslöseimpuls sind Bewegungen des Bedienpersonals, Bewegungen eines Bedienroboters, Bewegungen der Kabeltrommel 2 oder akustische und/oder elektromagnetische Signale möglich, die vom Sensor 7 erfasst werden. Durch das Bedienpersonal, einen Roboter oder eine Maschine erfolgt anschliessend die Kabelentnahme. Während der Kabelentnahme wird das entnommene Kabel 9 gemessen. Zusätzlich oder alternativ wird nach der Kabelentnahme eine Messeinheit 3, 5 eine Füllstandmessung oder eine Gewichtsmessung durchführen, mittels der ein Wert für die Restmenge des Kabels 9 ermittelt werden kann. Sofern die entnommene Kabelmenge, z.B. durch Messung der Gewichtsänderung, durch Messung der Füllstandsänderung oder durch Messung der Länge des entnommenen Kabels, gemessen wurde, so wird der entsprechende Messwert von einem früher registrierten Wert der Restmenge des Kabels 9 subtrahiert.

Die Füllstandmessung wird vorzugsweise nur für die Kabeltrommel 2 durchgeführt, von welcher eine Mengenentnahme erfolgt ist. Der Messwert der Füllstandmessung wird von der Messeinheit an die Verarbeitungseinheit 6 übermittelt, welche unter Verwendung des Messwerts den Restbestand der Kabel im Kabeltrommelregal 1 berechnet. Falls der Restbestand grösser als ein festgelegter Mindestsollbestandswert ist werden die Komponenten vorzugsweise wieder in den Bereitschaftszustand überführt. Falls der Restbestand geringer ist als der Mindestsollbestandswert wird ein Bestellvorgang ausgelöst und eine Bestellung 60 an einen Lieferanten gesandt.

Die vorzugsweisen Verfahrensabläufe sind in 2 prinzipiellen Diagrammen in Fig. 1 und Fig. 2 gezeigt.

Beim Ablaufdiagramm von Fig. 1 wird die Überwachungsvorrichtung des Kabeltrommelregals 1, d.h. die Messeinheiten 3, 4, 5 und die Verarbeitungseinheit 6, durch einen Auslöseimpuls aus dem Ruhezustand bzw. Bereitschaftszustand in den Betriebszustand versetzt, in dem die Kabelentnahme gemessen und die Restmenge des Kabels 9 auf der Kabeltrommel 2 bestimmt wird. Der Auslöseimpuls wird z.B. vom Sensor 7 nach der Detektion einer Bewegung der zugeordneten Kabeltrommel 2 zur Überwachungsvorrichtung gesandt. Nach der Mengenentnahme bzw. Kabel entnommen erfolgt z.B. eine Füllstandsmessung oder eine Gewichtsmessung. In einem nachfolgenden Schritt wird der Restbestand des Kabels 9 auf der Kabelrolle 2 berechnet. Der ermittelte Restbestand wird in der Folge mit einem Mindestsollbestand verglichen, wonach eine Bestellung ausgelöst wird, falls der Restbestand kleiner ist als der Mindestsollbestand. Andernfalls wird die Überwachungsvorrichtung wieder in den Bereitschaftszustand zurückversetzt.

Beim Ablaufdiagramm von Fig. 2 wird nach der Aktivierung der Überwachungsvorrichtung und während der Kabelentnahme z.B. durch die Messeinheit 4 die entnommene Kabelmenge, vorzugsweise die Länge des entnommenen Kabels gemessen. Der ermittelte Messwert wird von der Messeinheit 4 an die Verarbeitungseinheit 6 übermittelt, welche unter Berücksichtigung ermittelten Messwerts und des zuvor registrierten und z.B. in einer Datenbank gespeicherten Restbestandes des Kabels 9 einen neuen Restbestand berechnet. Der neue Restbestand wird anschliessend vorzugsweise in der Datenbank gespeichert und mit einem Mindestsollbestandswert verglichen. Falls der Restbestand grösser als ein festgelegter Mindestsollbestandswert ist, wird die Überwachungsvorrichtung wieder in den Bereitschaftszustand überführt. Falls der Restbestand geringer ist als der Mindestsollbestandswert, wird ein Bestellvorgang ausgelöst.

### Bezugszeichenliste

- 1: Kabeltrommelregal
- 11: Regalstruktur
- 12: Kabeltrommelhaltevorrichtung
- 121: Drehgelenk
- 2: Kabeltrommel
- 21: Speichereinheit auf Kabeltrommel
- 3: Füllstandsensor
- 30: Ausgangsleitung des Füllstandsensors
- 4: Meterzähler
- 40: Ausgangsleitung des Meterzählers
- 41: Anzeige
- 5: Gewichtsmessplatte
- 50: Ausgangsleitung der Gewichtsmessplatte
- 6: Verarbeitungseinheit
- 60: Meldung der Verarbeitungseinheit
- 7: Sensor
- 70: Sensorkanal
- 8: Transponder
- 80: Transponderkanal
- 9: Kabel

## Patentansprüche

1. Verfahren zur Bewirtschaftung eines Kabeltrommelregals (1), welches zumindest einen Lagerplatz für zumindest eine Kabeltrommel (2) umfasst, auf die ein Kabel (9) aufgewickelt ist, von dem ein Verbraucher Kabelstücke entsprechender Länge bedarfsweise entnehmen kann, und welches wenigstens eine Messeinheit (3; 4; 5) und eine Verarbeitungseinheit (6) umfasst, mittels denen bei jeder Kabelentnahme ein Wert für die Restmenge des Kabels (9) auf der Kabeltrommel (2) direkt oder indirekt bestimmt wird, wobei
a) nach der Kabelentnahme zumindest eine Zustandsgrösse der Kabeltrommel (2) gemessen und daraus ein Wert für die verbliebene Restmenge des Kabels (9) berechnet wird, oder
b) während der Kabelentnahme die Menge des entnommenen Kabels gemessen und ein Wert für die entnommene Kabelmenge ermittelt und anhand dessen ausgehend von einem registrierten Wert der Restmenge vor der Kabelentnahme ein Wert für die verbliebene Restmenge des Kabels (9) berechnet wird,
und der Wert der verbliebenen Restmenge des Kabels (9) mit einem Mindestsollbestandswert verglichen wird, wonach bei Unterschreiten dieses Mindestsollbestandswerts eine Bestellung (60) für das überwachte Kabel (9) ausgelöst wird, **dadurch gekennzeichnet, dass** das Kabeltrommelregal (1) wenigstens einen Sensor (7) umfasst der bei der Kabelentnahme resultierende Bewegungen der zugehörigen Kabeltrommel (2) erfasst und über einen Sensorkanal (70) drahtgebunden oder drahtlos an die Messeinheit (3; 4; 5) und/oder die Verarbeitungseinheit (6) übermittelt, die in einen Messmodus versetzt wird bzw. werden.

2. Verfahren nach Anspruch 1, **dadurch gekennzeichnet, dass** die Messeinheit (3; 4; 5) den nach der Kabelentnahme ermittelten Wert der verbliebenen Restmenge des Kabels (9) oder den Wert für die entnommene Kabelmenge über drahtgebundene oder drahtlose Kommunikationskanäle (30; 40; 50) zur Verarbeitungseinheit (6) übermittelt.

3. Verfahren nach Anspruch 1 oder 2, **dadurch gekennzeichnet, dass** die Messeinheit (3; 4; 5) und/oder die Verarbeitungseinheit (6) je von einem Prozessor gesteuert werden und ein Steuerprogramm aufweisen, mittels dessen der Wert für die entnommene Kabelmenge und/oder der Wert der Restmenge des Kabels (9) automatisch ermittelt wird.

4. Verfahren nach einem der Ansprüche 1 bis 3, **dadurch gekennzeichnet, dass** der Mindestsollbestandswert periodisch, vorzugsweise täglich, an den zukünftig erwarteten Verbrauch angepasst wird, vorzugsweise durch ein Auftragssteuerungsprogramm, welches in der Verarbeitungseinheit (6) oder in einem mit der Verarbeitungseinheit (6) verbundenen Leitrechner implementiert ist.

5. Verfahren nach einem der Ansprüche 1 bis 4, **dadurch gekennzeichnet, dass** die wenigstens eine Messeinheit (3; 4; 5) mit einem Messmodul ausgerüstet ist, mittels dessen zur Bestimmung des Werts der entnommenen Kabelmenge oder zur Berechnung des Werts der Restmenge des Kabels (9)
a) die Länge des entnommenen Kabels (9); oder
b) das Gewicht oder die Gewichtsänderung der Kabeltrommel (2); oder
c) der Füllstand oder die Füllstandsänderung der Kabeltrommel (2); oder
d) der Füllstand der Kabeltrommel (2) und die Umdrehungen der Kabeltrommel (2)
gemessen werden.

6. Verfahren nach einem der Ansprüche 1 bis 5, **dadurch gekennzeichnet, dass** die Berechnung des Werts der Restmenge des Kabels (9) unter Verwendung der technischen Daten, vorzugsweise des spezifischen Gewichts pro Längeneinheit, des Kabels (9) und/oder unter Berücksichtigung der mit der Kabelrolle (2) gelieferten Kabelmenge erfolgt.

7. Verfahren nach Anspruch 6, **dadurch gekennzeichnet, dass** die technischen Daten des Kabels (9) und/oder die ursprüngliche Kabelmenge in einer mit der Kabeltrommel (2) verbundenen Speichereinheit (21) gespeichert werden und dass nach Bestückung des Kabeltrommelregals (1) mit einer neuen Kabeltrommel (2) in der Speichereinheit (21) gespeicherte Daten des Kabels (9) und/oder die ursprüngliche Kabelmenge an die wenigstens eine Messeinheit (3; 4; 5) und/oder die Verarbeitungseinheit (6) übertragen werden.

8. Verfahren nach Anspruche 7, **dadurch gekennzeichnet**, die Speichereinheit (21) in einen RFID-Transponder (8) eingebettet ist, aus dem die Daten des Kabels (9) und/oder die ursprüngliche Kabelmenge drahtlos ausgelesen werden.

9. Kabeltrommelregal (1) zur Lagerung zumindest einer Kabeltrommel (2), umfassend eine Regalstruktur (11), eine Kabeltrommelhaltevorrichtung (12) zur drehbaren Lagerung der zumindest einen Kabeltrommel (2), wobei das Kabeltrommelregal (1) wenigstens eine Messeinheit (3; 4; 5) und eine Verarbeitungseinheit (6) umfasst, mittels denen bei jeder Kabelentnahme ein Wert für die Restmenge des Kabels (9) auf der Kabeltrommel (2) direkt oder indirekt bestimmbar ist, wobei
a) nach der Kabelentnahme zumindest eine Zustandsgrösse der Kabeltrommel (2) messbar und daraus ein Wert für die verbliebene Restmenge des Kabels (9) berechenbar ist, oder
b) während der Kabelentnahme die Menge des entnommenen Kabels messbar und ein Wert für die entnommene Kabelmenge ermittelbar und anhand dessen ausgehend von einem registrierten Wert der Restmenge vor der Kabelentnahme ein Wert für die verbliebene Restmenge des Kabels (9) berechenbar ist,
und dass der Wert der verbliebenen Restmenge des Kabels (9) mit einem Mindestsollbestandswert vergleichbar ist, wonach bei Unterschreiten dieses Mindestsollbestandswerts eine Bestellung (60) für das überwachte Kabel (9) auslösbar ist, **dadurch gekennzeichnet, dass** das Kabeltrommelregal (1) wenigstens einen Sensor (7) umfasst mittels dessen bei der Kabelentnahme resultierende Bewegungen der zugehörigen Kabeltrommel (2) erfassbar und über einen Sensorkanal (70) drahtgebunden oder drahtlos an die Messeinheit (3; 4; 5) und/oder die Verarbeitungseinheit (6) übermittelbar sind zum Versetzen der Messeinheit (3; 4; 5) und/oder der Verarbeitungseinheit (6) in einen Messmodus.

10. Kabeltrommelregal (1) nach Anspruch 9, **dadurch gekennzeichnet, dass** die Messeinheit (3, 4, 5) mit Kommunikationsmitteln zur drahtlosen oder drahtgebundenen Kommunikation mit der Verarbeitungseinheit (6) und mit einem Messmodul ausgerüstet ist, mittels dessen zur Bestimmung des Werts der entnommenen Kabelmenge oder zur Berechnung des Werts der Restmenge des Kabels (9)
a) die Länge des entnommenen Kabels (9); oder
b) das Gewicht oder die Gewichtsänderung der Kabeltrommel (2); oder
c) der Füllstand oder die Füllstandsänderung der Kabeltrommel (2); oder
d) der Füllstand der Kabeltrommel (2) und die Umdrehungen der Kabeltrommel (2)
messbar sind.

11. Kabeltrommelregal (1) nach Anspruch 10, **dadurch gekennzeichnet, dass** die Messeinheit (5) eine Gewichtsmessvorrichtung umfasst, mittels der das Gewicht der Kabeltrommel (2) samt Kabel (9) messbar ist oder dass die Messeinheit (3, 4, 5) zumindest einen optischen und/oder Ultraschall-basierten Füllstandsensor (3) umfasst.

12. Kabeltrommelregal (1) nach Anspruch 10, **dadurch gekennzeichnet, dass** die Messeinheit (4) derart ausgestaltet ist, dass die Länge des während eines Entnahmevorgangs entnommenen Kabels (9) vorzugsweise mittels eines Meterzählers (4) messbar ist.

13. Kabeltrommelregal (1) nach Anspruch 10, **dadurch gekennzeichnet, dass** die Messeinheit (3, 4, 5) und/oder die Verarbeitungseinheit (6) ein Auslesegerät umfassen, mittels dessen Daten drahtlos aus einer Speichereinheit (21) in einem RFID-Transponder (8) auslesbar sind, welche die technischen Daten des Kabels (9) und/oder die ursprüngliche Kabelmenge auf der Kabeltrommel (2) betreffen.

## Claims

1. Method for managing a cable drum rack (1), which comprises at least one storage space for at least one cable drum (2) on which a cable (9) is wound, from which a consumer can remove cable pieces of appropriate length as required, the cable drum rack (1) compring at least one measuring unit (3; 4; 5) and a processing unit (6) by means of which a value for the remaining quantity of the cable (9) on the cable drum (2) is determined directly or indirectly at each cable removal, wherein
a) after cable removal, at least one state variable of the cable drum (2) is measured and from this a value for the remaining amount of the cable (9) is calculated, or
b) during the cable removal, the amount of cable taken is measured and a value for the withdrawn cable quantity is determined and determined of which, starting from a registered value of the remaining quantity before cable removal, a value for the remaining amount of the cable (9) is calculated,
and that the value of the remaining remainder of the cable (9) is compared with a minimum order stock value, after which an undershoot order (60) for the monitored cable (9) is triggered if this minimum target stock value is undershot, **characterized in that** the cable drum shelf (1) comprises at least one sensor (7) detects the resulting cable removal movements of the associated cable drum (2) and via a sensor channel (70) wired or wirelessly to the measuring unit (3, 4, 5) and / or the processing unit (6), which are placed in a measuring mode.

2. Method according to claim 1, **characterized in that** the measuring unit (3; 4; 5) determines the value of the remaining quantity of cable (9) remaining after removal of the cable or the value of the withdrawn cable quantity via wired or wireless communication channels (30;) to the processing unit (6).

3. Method according to claim 1 or 2, **characterized in that** the measuring unit (3; 4; 5) and / or the processing unit (6) are each controlled by a processor and have a control program by means of which the value of the amount of cable removed and / or the value of the remaining amount of the cable (9) is determined automatically.

4. Method according to one of claims 1 to 3, **characterized in that** the minimum target stock value is adjusted periodically, preferably daily, to the expected future consumption, preferably by an order control program which is connected in the processing unit (6) or in one connected to the processing unit (6) Host computer is implemented.

5. Method according to one of claims 1 to 4, **characterized in that** the at least one measuring unit (3; 4; 5) is equipped with a measuring module, by means of which for determining the value of the removed cable quantity or for calculating the value of the residual amount of the cable (9)
a) the length of the removed cable (9); or
b) the weight or weight change of the cable drum (2); or
c) the level or level change of the cable drum (2); or
d) the level of the cable drum (2) and the revolutions of the cable drum (2)
are measured.

6. Method according to one of claims 1 to 5, **characterized in that** the calculation of the value of the residual amount of the cable (9) using the technical data, preferably the specific weight per unit length of the cable (9) and / or taking into account the cable roll (2) supplied amount.

7. Method according to claim 6, **characterized in that** the technical data of the cable (9) and / or the original cable quantity are stored in a storage unit (21) connected to the cable drum (2) and that after fitting the cable drum shelf (1) with a new one Cable drum (2) in the memory unit (21) stored data of the cable (9) and / or the original cable quantity to the at least one measuring unit (3; 4; 5) and / or the processing unit (6) are transmitted.

8. Method according to claim 7, **characterized in that** the memory unit (21) is embedded in an RFID transponder (8), from which the data of the cable (9) and / or the original cable quantity are read out wirelessly.

9. Cable drum rack (1) for supporting at least one cable drum (2) comprising a rack structure (11), a cable drum holding device (12) for rotatably supporting the at least one cable drum (2), the cable drum rack (1) compring at least one measuring unit (3 4, 5) and a processing unit (6) by means of which at each cable removal a value for the remaining amount of the cable (9) on the cable drum (2) is directly or indirectly determined,
a) after the cable removal at least one state variable of Cable drum (2) can be measured and from a value for the remaining amount of the cable (9) is calculable, or
b) during the cable removal, the amount of the removed cable measurable and a value for the amount of cable removed determined and on the basis of this, starting from a registered value Remaining amount before the cable removal a value for the remaining amount of the remaining cable (9) is calculable,
and that the value of the remaining amount of the cable (9) is comparable to a minimum target stock value, according to which an order (60) for the monitored cable (9) can be triggered if this minimum stock value is undershot **characterized in that** the cable drum rack (1) comprises at least one sensor (7), by which movements resulting from the removal of cable form the corresponding cable drum (2) are detectable and transmittable via a sensor channel (70) by wire or wireless to the measuring unit (3, 4, 5) and/or the processing unit (6) to transfer the measuring unit (3, 4, 5) and/or the processing units (6) to the measuring mode.

10. Cable drum rack (1) according to claim 9, **characterized in that** the measuring unit (3, 4, 5) is equipped with communication means for wireless or wired communication with the processing unit (6) and with a measuring module, by means of which the value of the withdrawn cable quantity or for calculating the value of the residual amount of the cable (9)
a) the length of the withdrawn cable (9); or
b) the weight or weight change of the cable drum (2); or
c) the level or level change of the cable drum (2); or
d) the level of the cable drum (2) and the revolutions of the cable drum (2)
are measurable.

11. Cable drum rack (1) according to claim 10, **characterized in that** the measuring unit (5) comprises a weight measuring device by means of which the weight of the cable drum (2) including cable (9) is measurable or that the measuring unit (3, 4, 5) at least one optical and / or ultrasound-based level sensor (3).

12. Cable drum rack (1) according to claim 10, **characterized in that** the measuring unit (4) is designed such that the length of the removed during a removal operation cable (9), preferably by means of a meter counter (4) is measurable.

13. Cable drum rack (1) according to claim 10, **characterized in that** the measuring unit (3, 4, 5) and / or the processing unit (6) comprise a reading device, by means of which data wirelessly from a memory unit (21) in an RFID transponder (8) are readable, which relate to the technical data of the cable (9) and / or the original amount of cable on the cable drum (2).

## Revendications

1. Procédé de gestion d'une étagère de tambour à câble (1), qui comprend au moins un espace de stockage pour au moins un tambour de câble (2) sur lequel est enroulé un câble (9) permettant à un consommateur de retirer des câbles de longueur appropriée, caractérisé 1) comprend au moins une unité de mesure (3; 4; 5) et une unité de traitement (6) permettant de déterminer directement ou indirectement la valeur restante du câble (9) sur le tambour de câble (2), Après le retrait du câble, au moins une variable d'état du touret (2) est mesurée et à partir de là, une valeur pour la quantité restante du câble (9) est calculée ou b) lors du retrait du câble, la quantité de câble prise est mesurée et la valeur du câble retiré dont, à partir d'une valeur enregistrée de la quantité restante avant retrait du câble, une valeur correspondant à la quantité restante du câble (9) est calculé, et en ce que la valeur du reste du câble (9) est comparée à une valeur de stock minimum de commande, après quoi un ordre inférieur (60) pour le câble surveillé (9) est déclenché si cette valeur de stock cible minimale est inférieure **caractérisé en ce que** l'étagère de tambour à câble (1) comprend au moins un capteur (7) détectant les mouvements de retrait de câble du tambour à câble associé (2) et via un canal de capteur (70) câblé ou sans fil à l'unité de mesure (3, 4, 5) et / ou l'unité de traitement (6), qui sont placées dans un mode de mesure.

2. Procédé selon la revendication 1, **caractérisé en ce que** l'unité de mesure (3; 4; 5) détermine la valeur restante du câble (9) après l' élimination du câble ou la valeur de la quantité de câble retirée via des canaux de communication câblés ou sans fil (30; ) à l'unité de traitement (6).

3. Procédé selon la revendication 1 ou 2, **caractérisé en ce que** l'unité de mesure (3; 4; 5) et / ou l'unité de traitement (6) sont chacune commandées par un processeur et ont un programme de commande au moyen duquel la valeur de la quantité de câble retirée et / ou la valeur de la quantité restante du câble (9) est déterminée automatiquement.

4. Procédé selon une des revendications 1 à 3, **caractérisé en ce que** la valeur de stock cible minimale est ajustée périodiquement, de préférence quotidiennement, à la consommation future attendue, de préférence par un programme de commande relié à l'unité de traitement (6) ou à l'unité de traitement (6). L'ordinateur hôte est implémenté.

5. Procédé selon une des revendications 1 à 4, **caractérisé en ce qu'**au moins une unité de mesure (3; 4; 5) est équipée d'un module de mesure permettant de déterminer la valeur de la quantité de câble retirée ou de calculer la valeur résiduelle du câble (9).)
a) la longueur du câble retiré (9); ou
b) le changement de poids ou de poids du tambour de câble (2); ou
c) le changement de niveau ou le niveau du touret de câble (2); ou
d) le niveau du tambour de câble (2) et les tours du tambour de câble (2)
sont mesurés.

6. Procédé selon une des revendications 1 à 5, **caractérisé en ce que** l'on calcule la valeur de la quantité résiduelle du câble (9) en utilisant les données techniques, de préférence le poids spécifique par unité de longueur du câble (9) et Rouleau de câble (2) quantité de câble fourni.

7. Procédé selon la revendication 6, **caractérisé en ce que** les données techniques du câble (9) et / ou la quantité de câble d'origine sont stockées dans une unité de stockage (21) reliée au touret (2) et après montage de l'étagère (1). Un tambour de câble (2) dans l'unité de mémoire (21) contenant des données du câble (9) et / ou la quantité de câble d'origine vers l'unité de mesure (3; 4; 5) et / ou l'unité de traitement (6) est transmis.

8. Procédé selon la revendication 7, **caractérisé en ce que** l'unité de mémoire (21) est intégrée dans un transpondeur RFID (8) à partir duquel les données du câble (9) et / ou la quantité de câble d'origine sont lues sans fil.

9. Etagère pour tambour de câbles (1) pour supporter au moins un tambour de câble (2) comprenant une structure à crémaillère (11), un dispositif de maintien de tambour à câble (12) pour supporter ledit au moins un tambour de câble (2), au moins une unité de mesure (3, 4, 5) et une unité de traitement (6) au moyen de laquelle, à chaque retrait de câble, une valeur pour la quantité restante du câble (9) sur le touret (2) est déterminée directement ou indirectement,
a) après l'enlevement du câble (9), une valeur caractéristique du tambour de câble (2) peut être mesuré et à partir de la valeur restante du câble (9) peut être calculé ou
b) pendant le retrait du câble, la quantité de câble retirée est mesurable et la valeur du câble La quantité restante avant le retrait du câble permet de calculer une valeur pour la quantité restante du câble restant (9) et la valeur du montant restant de s le câble (9) est comparable à une valeur de stock cible minimale, selon laquelle un ordre (60) pour le câble surveillé (9) peut être déclenché si cette valeur de stock minimale est sous-atteinte **caractérisé en ce que** l'étagère pour de tambour de câbles (1) comprend au moins un capteur (7) détectant les mouvements de retrait de câble du tambour à câble associé (2) et via un canal de capteur (70) câblé ou sans fil à l'unité de mesure (3, 4, 5) et / ou l'unité de traitement (6), qui sont placées dans un mode de mesure.

10. Etagère pour tambour de câbles (1) selon la revendication 9, **caractérisé en ce que** l'unité de mesure (3, 4, 5) est équipée de moyens de communication pour la communication sans fil ou filaire avec l'unité de traitement (6) et un module de mesure. ou pour calculer la valeur de la quantité résiduelle du câble (9)
a) la longueur du câble retiré (9); ou
b) le changement de poids ou de poids du tambour de câble (2); ou
c) le changement de niveau ou de niveau du touret de câble (2); ou
d) le niveau du tambour de câble (2) et les tours du tambour de câble (2)
sont mesurables.

11. Etagère pour tambour de câbles (1) selon la revendication 10, **caractérisé en ce que** l'unité de mesure (5) comprend un appareil de mesure de poids permettant de mesurer le poids du tambour (2), câble compris (9), ou l'unité de mesure (3, 4, 5). capteur de niveau optique et / ou basé sur les ultrasons (3).

12. Etagère pour tambour de câbles (1) selon la revendication 10, **caractérisé en ce que** l'unité de mesure (4) est conçue de manière à pouvoir mesurer la longueur du câble retiré (9), de préférence à l'aide d'un compteur (4).

13. Etagère pour tambour de câbles (1) selon la revendication 10, **caractérisé en ce que** l'unité de mesure (3, 4, 5) et / ou l'unité de traitement (6) comprennent un dispositif de lecture de données sans fil d'une unité de mémoire (21) dans un transpondeur RFID (8).) lisibles, qui se rapportent aux données techniques du câble (9) et / ou à la quantité originale de câble sur le touret (2).
